# EUROPEAN PATENT APPLICATION

(11) **EP 2 985 499 A1**
(43) Date of publication of application: **17.02.2016**
(21) Application number: 15175496.7
(22) Date of filing: 06.07.2015
(51) Int. Cl.: F16K 7/04, C08J 7/06, C08J 7/12, F16K 25/00, B29C 71/00, B29C 35/02

(54) **PINCH VALVE TUBE, METHOD FOR MANUFACTURING THE SAME, AND PINCH VALVE**

(30) Priority: 11.08.2014 JP 2014163849
(71) Applicant: SUMITOMO RUBBER INDUSTRIES, LTD., Kobe-shi, Hyogo-ken, 651-0072 (JP)
(72) Inventor: FUJIMOTO, Kentaro, Kobe-shi, Hyogo 651-0072 (JP)
(74) Representative: Manitz, Finsterwald & Partner GbR

(57) **Abstract**

A pinch valve tube according to the present invention includes a fluororubber tube, the entirety of which is formed integrally of fluororubber and having an internal cavity arranged as a flow passage for a fluid, and a crosslink density of the fluororubber forming an inner surface of the flow passage is made higher than an average crosslink density of the entirety.

## Description

### {Cross-Reference to Related Applications}

The present application corresponds to Japanese Patent Application No. 2014-163849 filed on August 11, 2014 in the Japan Patent Office, and the entire disclosure of this application is incorporated herein by reference.

### {Field of the Invention}

The present invention relates to a pinch valve tube that is incorporated in a pinch valve to define a flow passage for a fluid, a method for manufacturing the same, and a pinch valve incorporating the pinch valve tube.

### {Background Art}

As a valve that controls the flow of a fluid, there is known a pinch valve that includes a soft tube (pinch valve tube), having an internal cavity arranged as a flow passage for the fluid, and a manual type or electrically driven type opening/closing mechanism arranged to switch between the two states of a state in which the flow passage is closed by pressing of the tube in a radial direction and a state in which the flow passage is opened by releasing of the pressing.

Portions of the pinch valve besides the inner surface of the tube that defines the flow passage do not contact the fluid, and therefore, for example, the flow passage can be kept clean constantly by exchanging the tube after use and an effect is provided in terms of preventing cross-contamination of fluids, etc. There is also provided an advantage of enabling satisfactory use, without occurrence of clogging, valve operation failure, etc., even, for example, with a slurry, etc., having solid particles mixed therein.

Pinch valves are thus used widely in various fields, such as chemicals, semiconductors, foods, biotechnology, etc.

As the pinch valve tube, a fluororubber tube, which is flexible and yet chemically stable and excellent in chemical resistance, etc., is used favorably.

However, a fluororubber is generally high in tackiness, and when used as a pinch valve tube and opened and closed repeatedly, a problem is posed in particular by the slowness of the closed-to-open response speed. That is, with an ordinary fluororubber tube, the response time from the release of pressing by operation of the opening/closing mechanism from the state of closing the flow passage by pressing in the radial direction to the actual opening of the flow passage to a prescribed state by restoration of the tube by its own resilience is long due to the tackiness of the fluororubber and this thus poses the problem of slow response speed.

However, in applications using pinch valves, it is required to rapidly deliver and stop minute amounts of a fluid in many cases and therefore the slowness of response speed poses a problem.

Therefore, for example, making the cross-sectional shape of the flow passage in the tube a modified shape, such as a substantially fusiform shape, etc., instead of the ordinary circular shape and providing of a non-self-tacky layer, constituted of a coating film of fluororesin, on the inner surface of the flow passage have been examined to improve the closed-to-open response speed in particular (Patent Document 1: Japanese Patent Application Publication No. 2005-207470).

### {Brief Summary of the Invention}

However, when the cross-sectional shape of the flow passage is made a modified shape as described in Patent Document 1, the flow of fluid inside the flow passage becomes complex and this may influence the state of the fluid such that, for example, separation and precipitation of solid particles occur in a slurry, etc.

Also, when a non-self-tacky layer is provided on the inner surface of the flow passage, the coating film of fluororesin forming the non-self-tacky layer may become worn or peeled off in a short period due to friction with the fluid or solid particles, etc., contained therein and thereby cause contamination.

An object of the present invention is to provide a pinch valve tube, which enables the forming of a pinch valve that is high in closed-to-open response speed in particular without making the cross-sectional shape of a flow passage a modified shape and without forming a coating film that causes contamination, a method for manufacturing the same, and a pinch valve using the pinch valve tube.

The present invention provides a pinch valve tube including a fluororubber tube, the entirety of which is formed integrally of fluororubber and having an internal cavity arranged as a flow passage for a fluid, and where a crosslink density of the fluororubber forming an inner surface of the flow passage is made higher than an average crosslink density of the entirety.

Also, the present invention provides a method for manufacturing the pinch valve tube according to the present invention including a step of putting the inner surface of the flow passage of the fluororubber tube in contact with an organic solvent solution of a crosslinking agent (may hereinafter be referred to briefly as the "crosslinking agent solution") to make the amount of the crosslinking agent to be contained in the fluororubber tube higher at the inner surface than an average value of the entirety and thereafter crosslinking the fluororubber.

Further, the present invention provides a pinch valve including the pinch valve tube according to the present invention and an opening/closing mechanism arranged to switch between the two states of a state in which the flow passage is closed by pressing of the pinch valve tube in a radial direction and a state in which the flow passage is opened by releasing of the pressing.

### {Advantageous Effects of the Invention}

With the pinch valve tube according to the present invention, the crosslink density of the fluororubber forming the inner surface of the flow passage of the fluid in the fluororubber tube, the entirety of which is formed integrally of fluororubber, is made higher than the average crosslink density of the entirety so that the tackiness of the inner surface itself can be suppressed without having to form a coating film that causes contamination.

Therefore, with the pinch valve tube according to the present invention, the closed-to-open response speed in particular can be improved in a state of incorporation in a pinch valve without forming the coating film or making the cross-sectional shape of a flow passage a modified shape.

Also with the manufacturing method according to the present invention, the pinch valve tube according to the present invention can be manufactured with good productivity and at low cost by simply performing the step of putting the inner surface of the flow passage of the fluororubber tube, which is to constitute the pinch valve tube, in contact with the crosslinking agent solution and thereafter crosslinking the fluororubber.

Further with the present invention, a pinch valve that excels over the conventional art in the closed-to-open response speed in particular can be provided by incorporating the pinch valve tube according to the present invention.

### {Brief Description of the Drawing}

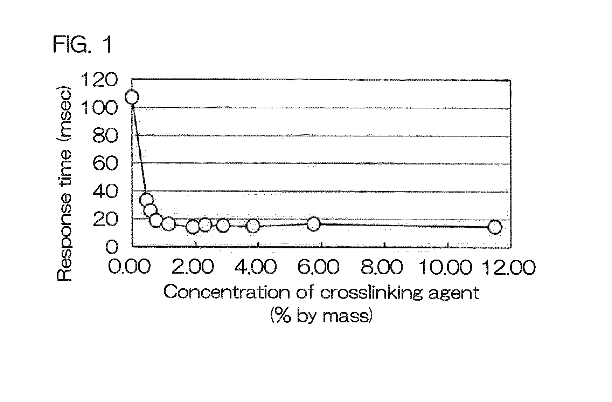

FIG. 1 is a graph of a relationship between concentration of a crosslinking agent in a crosslinking agent solution and response time of a pinch valve in an example of the present invention.

### {Description of Embodiments}

### <Pinch Valve Tube and Method for Manufacturing the Same>

The present invention provides a pinch valve tube including a fluororubber tube, the entirety of which is formed integrally of fluororubber and having an internal cavity arranged as a flow passage for a fluid, and where a crosslink density of the fluororubber forming an inner surface of the flow passage is made higher at the inner surface than an average crosslink density of the entirety.

Also, the present invention provides a method for manufacturing the pinch valve tube according to the present invention including a step of putting the inner surface of the flow passage of the fluororubber tube in contact with a crosslinking agent solution to make the amount of the crosslinking agent to be contained in the fluororubber tube higher at the inner surface than an average value of the entirety and thereafter crosslinking the fluororubber.

### (Fluororubber)

As the fluororubber that is to define the fluororubber tube, for example, one type or two or more types of any of various fluororubbers having fluorine inside the molecule, having a crosslinking property, and capable of expressing rubber elasticity upon being crosslinked, such as a vinylidene fluoride-trifluorochloroethylene binary copolymer, vinylidene fluoride-hexafluoropropylene binary copolymer, vinylidene fluoride-hexafluoropropylene-tetrafluoroethylene ternary copolymer, or other vinylidene fluoride based fluororubber (FKM), a tetrafluoroethylene-propylene based fluororubber (FEPM), and a tetrafluoroethylene-perfluorovinyl ether based fluororubber (FFKM) can be cited.

Also, although fluororubbers are classified according to the type of crosslinking system (vulcanizing system) into a diamine crosslinking system, a bisphenol or other polyol crosslinking system, a peroxide crosslinking system, etc. , any of these may be used in the present invention. There are also fluororubbers that are supplied with a crosslinking agent being internally added in advance and such crosslinking agent internally added types may also be used in the present invention.

Among the above, a vinylidene fluoride based fluororubber that is of the polyol crosslinking system and crosslinking agent internally added type is used especially favorably because of being excellent in general applicability and handling properties and enabling the forming of a fluororubber tube that is excellent in rubber elasticity, wear resistance, tensile strength, etc.

As a specific example of such a vinylidene fluoride based fluororubber that is of the polyol crosslinking system and crosslinking agent internally added type, one type or two or more types among A-401C, A-201C, etc., of the Viton (registered trademark) series manufactured by DuPont Elastomers Inc., can be cited.

### (Additives)

A supplement accelerator, acid accepting agent, auxiliary processing agent, filler, etc., may be blended in the fluororubber in the same manner as is done conventionally.

Among the above, as the supplement accelerator, for example, calcium hydroxide is used favorably in the case of a polyol crosslinking system. The blending proportion of calcium hydroxide with respect to 100 parts by mass of fluororubber is preferably not less than 3 parts by mass and preferably not more than 10 parts by mass.

Also as examples of the acid accepting agent, magnesium salts such as magnesium oxide, and lead oxide (litharge), etc., can be cited. The blending proportion of the acid accepting agent with respect to 100 parts by mass of fluororubber is preferably not less than 1 part by mass and preferably not more than 5 parts by mass.

Any of various waxes, etc., can be cited as the auxiliary processing agent. In particular, carnauba wax of any of various grades is preferable. The blending proportion of the auxiliary processing agent with respect to 100 parts by mass of fluororubber is preferably not less than 0.5 parts by mass and preferably not more than 5 parts by mass.

Carbon black, etc., can be cited as the filler. The blending proportion of carbon black with respect to 100 parts by mass of fluororubber is preferably not less than 20 parts by mass and preferably not more than 40 parts by mass.

If the crosslinking agent internally added type described above is used as the fluororubber, the blending proportions of the respective components mentioned above shall be set within the ranges given above with respect to 100 parts by mass of the total amount of fluororubber including the internally added crosslinking agent.

### (Molding and primary crosslinking)

A fluororubber composition containing the respective components described above is molded into a tube shape and subject to primary crosslinking as necessary to prepare the fluororubber tube.

Although the fluororubber tube may, for example, be formed to a tube shape that is modified in its entirety so that the cross-sectional shape of the flow passage is made a substantially fusiform shape or other modified shape such as described in Patent Document 1, with the present invention, a high response speed can be secured even if the cross-sectional shape of the flow passage is made an ordinary circular shape.

Therefore in consideration of preventing the flow of the fluid inside the flow passage from becoming complex and thereby influencing the state of the fluid as mentioned above and simplifying the shape to improve the moldability, productivity, etc., of the fluororubber tube, it is preferable to form the fluororubber tube to have an ordinary tube shape with the cross-sectional shape of the flow passage being circular.

The processes of molding and primary crosslinking may be carried out in the same manner as is done conventionally. That is, as the molding method, any of various molding methods such as a press molding method, extrusion molding method, transfer molding method, and injection molding method may be adopted, and with the press molding method and the transfer molding method, the fluororubber may be subject to primary crosslinking by heating at the same time as molding. Also with any of the other molding methods, after molding to a prescribed shape, primary crosslinking may be performed by heating using a vulcanizer, etc.

The molding and primary crosslinking conditions may be set as suited.

### (Treatment by crosslinking agent solution and secondary crosslinking)

Thereafter, the inner surface of the flow passage of the fluororubber tube, which has been subject as necessary to primary crosslinking after being molded, is put in contact with the crosslinking agent solution. The crosslinking agent solution then permeates gradually from the inner surface into the interior of the fluororubber tube and accordingly, the crosslinking agent in the crosslinking agent solution also permeates gradually from the inner surface into the interior.

Any method may be selected to make the crosslinking agent solution contact the inner surface of the flow passage of the fluororubber tube. For example, it may be considered to immerse the entire fluororubber tube into the crosslinking agent solution so that the crosslinking agent solution enters into the interior of the flow passage or to inject the crosslinking agent solution just into the interior of the flow passage of the fluororubber tube.

After then setting still for a fixed time as necessary, the fluororubber tube is taken out from the crosslinking agent solution and the crosslinking agent solution in the interior of the flow passage is expelled in the former case of immersion or the crosslinking agent solution in the interior of the flow passage is expelled in the latter case of immersion and thereafter drying is performed further to stop the permeation of the crosslinking agent in accordance with the permeation of the crosslinking agent solution.

The crosslinking agent content in the fluororubber tube is thereby made to exhibit a distribution of being maximum at the inner surface of the flow passage that was in contact with the crosslinking agent solution and gradually decreasing toward the interior of the fluororubber tube and consequently, a state where the content at the inner surface is higher than an average value of the entirety is attained.

As the crosslinking agent that is to define the crosslinking agent solution, any of the crosslinking agents of the various aforementioned crosslinking systems that can crosslink the fluororubber may be used.

However, if the fluororubber is of the type in which the crosslinking agent is internally added in advance as described above, it is preferable, in making the crosslinking proceed smoothly, to use the crosslinking agent of the same system as the internally added crosslinking agent.

For example, if the fluororubber is a crosslinking agent internally added type fluororubber of the polyol crosslinking system, it is preferable to also use a polyol system crosslinking agent as the crosslinking agent blended in the crosslinking agent solution.

As examples of such a polyol system crosslinking agent, bisphenols, such as bisphenol AF, a 1:1 mass ratio salt of benzyltriphenylphosphonium and bisphenol AF, etc., can be cited. It is especially preferable to use these two types of polyol system crosslinking agents in combination at proportions such that mass ratio (bisphenol AF)/(salt of bisphenol AF) = 1.3/0.7 to 1.7/0.3.

Also, as an organic solvent that is to define the crosslinking agent solution, any of various organic solvents having a property of dissolving the crosslinking agent and having permeability with respect to the fluororubber may be used.

As the organic solvent, for example, in a case where the crosslinking agent is a polyol system crosslinking agent, a mixed solvent, in which a ketone, such as acetone, etc., and an alcohol, such as methanol and ethanol, etc., are blended at a mass ratio in a range of 0.8/1.2 to 1.2/0.8, is preferable.

When the fluororubber tube is thereafter heated for a fixed time and made to undergo secondary crosslinking, the crosslink density of the fluororubber forming the inner surface of the flow passage is made higher than the average crosslink density of the entirety based on the difference in crosslinking agent content described above, and the pinch valve tube according to the present invention that is suppressed in tackiness of the inner surface is thereby manufactured.

The degree to which the crosslink density of the fluororubber forming the inner surface is made high may be set as suited. This is because the tackiness of the inner surface can be suppressed to improve the closed-to-open response speed of the pinch valve by making the crosslink density of the inner surface higher than the average crosslink density of the entirety as possible.

By the above crosslinking mechanism, the difference of crosslink density of the inner surface is adjustable based on the difference of abundance ratio of the crosslinking agent, and the difference of abundance ratio of the crosslinking agent can be adjusted to some degree in accordance with conditions during the process of putting the crosslinking agent solution in contact with and making the crosslinking agent permeate into the inner surface of the flow passage of the fluororubber tube, such as the concentration of the crosslinking agent in the crosslinking agent solution, the time during which the inner surface is put in contact with the crosslinking agent solution, the liquid temperature of the crosslinking agent during the process, etc.

However, when the concentration of the crosslinking agent solution reaches a certain level or higher, the effect due to increasing the crosslink density of the inner surface saturates and it tends to become difficult to improve the response speed of the pinch valve any further.

Moreover, it becomes easy for a crack to form in the fluororubber tube, and when a crack forms, the fluororubber detached therefrom may cause contamination or the entirety of the fluororubber tube may become hard so that the response speed of the pinch valve decreases instead or liquid leakage may occur from the cracked portion.

Such problems occur similarly when the time during which the inner surface of the flow passage is put in contact with the crosslinking agent solution is made too long or when the liquid temperature in this process is too high.

The conditions, such as the crosslinking agent concentration of the crosslinking agent solution, the contact time, the temperature, etc., are thus desirably set in ranges in which the response speed of the pinch valve can be improved sufficiently and yet in which a crack does not form in the fluororubber tube.

For example, in a case where the two types of crosslinking agents mentioned above are used in combination at the proportions mentioned above, acetone and methanol are used in combination at the proportions mentioned above as the organic solvent, the temperature at which the crosslinking agent solution is put in contact is set to ordinary temperature (20±15°C), and the time of contact is set to 15 minutes, it is clear from results of an example to be described below that, under the above conditions, the total concentration of the two types of crosslinking agents in the crosslinking agent solution is preferably set to not less than 0.4% by mass and especially preferably set to not less than 1% by mass and preferably set to not more than 5% by mass and especially preferably set to not more than 4% by mass to sufficiently improve the response speed of the pinch valve without causing crack formation.

When the entirety of the fluororubber tube is immersed in the crosslinking agent solution, not only the inner surface of the flow passage of the fluororubber tube but the outer surface is also made high in crosslink density and suppressed in tackiness by the same mechanism. Although the lowness of tackiness of the outer surface does not influence the response property of the pinch valve, it provides, for example, an advantage of improving handling property in combining the pinch valve tube with an opening/closing mechanism to prepare a pinch valve.

### <Pinch Valve>

The present invention provides a pinch valve including the pinch valve tube according to the present invention and an opening/closing mechanism arranged to switch between the two states of a state in which the flow passage is closed by pressing of the pinch valve tube in a radial direction and a state in which the flow passage is opened by releasing of the pressing.

As the opening/closing mechanism, it is possible to adopt any of various types of opening/closing mechanisms that include a driving portion, for example, of a manual type, an electrically driven type using a solenoid or electric motor, etc., or a pressure type, such as a pneumatic type or hydraulic type, etc. , and is capable, by operation of the driving portion, of switching between the two states of the state in which the flow passage is closed by pressing of the pinch valve tube in the radial direction and the state in which the flow passage is opened by releasing of the pressing.

By the pinch valve according to the present invention, the closed-to-open response speed can be improved in particular over the conventional art.

### [Example]

### <Preparation of Fluororubber Tube>

One hundred parts by mass of a vinylidene fluoride based fluororubber of the polyol crosslinking system and crosslinking agent internally added type [the aforementioned Viton A-401C manufactured by DuPont Elastomers Inc.] were blended with 30 parts by mass of carbon black, 6 parts by mass of calcium hydroxide, and 3 parts by mass of a magnesium salt, and after kneading, press molding to a tube shape and primary crosslinking were performed at 182°C to prepare a fluororubber tube.

### <Preparation of Crosslinking Agent Solution>

As polyol system crosslinking agents, the two types of bisphenol AF and a 1:1 mass ratio salt of benzyltriphenylphosphonium and bisphenol AF were used in combination at a mass ratio of 1.52/0.48.

The two types of polyol system crosslinking agents were dissolved to the concentrations shown in Table 1, to be described later, in a mixed solvent of acetone and methanol of mass ratio 1/1 to prepare the crosslinking agent solution.

### <Manufacture of Pinch Valve Tube>

The entirety of the fluororubber tube prepared in advance was immersed in the crosslinking agent solution, prepared as described above, so that the crosslinking agent solution entered into the interior of the flow passage and, after setting still for 15 minutes at ordinary temperature, was taken out, expelled of the crosslinking agent solution in the interior of the flow passage, and dried.

Thereafter, heating at 232°C was performed for 24 hours to perform secondary crosslinking and a pinch valve tube of 2.08mm outer diameter and 1.14mm inner diameter was thereby manufactured.

### <Evaluation of Crosslink Density>

Samples were taken respectively from the fluororubber tube before immersion in the crosslinking agent solution and the pinch valve tube manufactured by immersion of the fluororubber tube in the crosslinking agent solution, and swelling rates of the respective samples were determined from the change of mass before and after immersion for 24 hours in acetone as a solvent under the condition of 23°C temperature to evaluate the crosslink density. That is, it can be judged that the lower the swelling rate, the higher the crosslinking density.

### <Preparation of Pinch Valve and Measurement of Response Time and Crack Occurrence Rate>

The manufactured pinch valve tube was combined with a solenoid driven type opening/closing mechanism to prepare a pinch valve, one end of the pinch valve tube was connected as an IN side to an air supplying portion, and the other end was connected as an OUT side to a pressure gauge.

Then while applying an air pressure of 100kPa to the IN side of the pinch valve tube in a state where the flow passage was closed by pressing of the pinch valve tube in the radial direction by operation of the opening/closing mechanism, the time taken from the point at which the pressing of the pinch valve tube by the opening/closing mechanism was released by operation of the opening/closing mechanism to the detection of a prescribed pressure by the pressure gauge at the OUT side due to the flow passage of the pinch valve tube being actually opened was measured as a response time to evaluate the response speed.

Also, the percentage of a plurality of pinch valve tubes, treated by the crosslinking agent of the same concentration, in which a crack occurred was determined by deeming that there is crack if an air leakage sound was issued when the air pressure of 100kPa was applied to the IN side of the pinch valve tube in the state where the flow passage was closed by pressing of the pinch valve tube in the radial direction.

The swelling rates and crack occurrence rates are shown in Table 1 and the response time measurement results are shown in Table 1 and FIG. 1. "Untreated" in Table 1 indicates the measurement results when the opening/closing mechanism was combined with the fluororubber tube, prepared as described above, as the pinch valve tube as it is without undergoing the treatment of immersing in the crosslinking agent solution and thereafter performing secondary crosslinking and corresponds to the data of 0% by mass concentration in FIG. 1.
[Table 1]

**Table 1**

| Concentration of crosslinking agent (% by mass) | Swelling rate (%) | Response time (msec) | Crack occurrence rate (%) |
|---|---|---|---|
| Untreated | 195.8 | 107.2 | 0 |
| 0.460 | 191.2 | 33.4 | 0 |
| 0.575 | 188.6 | 25.9 | 0 |
| 0.759 | 183.9 | 18.8 | 0 |
| 1.150 | 183.5 | 16.3 | 0 |
| 1.909 | 181.5 | 14.2 | 0 |
| 2.300 | 177.8 | 15.6 | 0 |
| 2.875 | 178.5 | 15.2 | 0 |
| 3.841 | 177.7 | 15.0 | 0 |
| 5.750 | 176.4 | 16.6 | 20 |
| 11.500 | 175.1 | 14.8 | 40 |

From the results of Table 1 and FIG. 1, it was found that the response speed of the pinch valve can be improved significantly by immersing the fluororubber tube in the crosslinking agent solution and thereafter performing secondary crosslinking to increase the crosslink density of the inner surface of the flow passage and suppress the tackiness of the inner surface and that this effect can be improved further by increasing the concentration of the crosslinking agent in the crosslinking agent solution.

However, it was found from the results of Table 1 and FIG. 1 that when the concentration of the crosslinking agent reaches a certain level or higher, not only does the above effect become saturated so that the response speed cannot be improved any further but the crack occurrence rate increases, and that therefore under the aforementioned immersion conditions, the total concentration of the two types of crosslinking agents in the crosslinking agent solution is preferably set to not less than 0.4% by mass and especially preferably set to not less than 1% by mass and preferably set to not more than 5% by mass and especially preferably set to not more than 4% by mass.

## Claims

1. A pinch valve tube comprising a fluororubber tube, the entirety of which is formed integrally of fluororubber and having an internal cavity arranged as a flow passage for a fluid, and wherein a crosslink density of the fluororubber forming an inner surface of the flow passage is made higher than an average crosslink density of the entirety.

2. The pinch valve tube according to Claim 1, manufactured by crosslinking the fluororubber in a state where an amount of crosslinking agent to be contained in the fluororubber rubber tube is made higher at the inner surface than the average value of the entirety.

3. The pinch valve tube according to Claim 1 or 2, manufactured by putting the inner surface in contact with an organic solvent solution of a crosslinking agent to make the amount of the crosslinking agent to be contained in the fluororubber tube higher at the inner surface than an average value of the entirety and thereafter crosslinking the fluororubber.

4. A method for manufacturing the pinch valve tube according to any of Claims 1 to 3, comprising a step of putting the inner surface of the flow passage of the fluororubber tube in contact with an organic solvent solution of a crosslinking agent to make the amount of the crosslinking agent to be contained in the fluororubber tube higher at the inner surface than an average value of the entirety and thereafter crosslinking the fluororubber.

5. A pinch valve comprising the pinch valve tube according to any of Claims 1 to 3; and an opening/closing mechanism arranged to switch between the two states of a state in which the flow passage is closed by pressing of the pinch valve tube in a radial direction and a state in which the flow passage is opened by releasing of the pressing.
